# EUROPÄISCHE PATENTANMELDUNG

(11) **EP 1 095 881 A1**
(43) Veröffentlichungstag der Anmeldung: **02.05.2001**
(21) Anmeldenummer: 00122117.5
(22) Anmeldetag: 12.10.2000
(51) Int. Cl.: B65G 69/18, B65G 11/20

(54) **Beladerohr mit Staukopf**

(30) Priorität: 26.10.1999 DE 19951628
(71) Anmelder: BÜHLER AG, 9240 Uzwil (CH)
(72) Erfinder: Haymoz, Robert, 9240 Uzwil (CH)
(74) Vertreter: Frommhold, Joachim, Dr.

(57) **Zusammenfassung**

Die gestellte Aufgabe, eine einfache Vorrichtung für ein staubarmes beladen zu schaffen, wurde dadurch gelöst, dass der Staukopf (2) einen oberen Teil mit Schikanen zur Vernichtung der Fallenergie des Schüttgutes und einen darunterliegenden gewichtsgesteuerten Auslass mit einem Wägebehälter (4) aufweist.

## Beschreibung

Die Erfindung betrifft einen Beladerohr-Staukopf, insbesondere für Belade- und Tankeinrichtungen in Silos oder für Schiffsentlader gemäss der Merkmale des Oberbegriffs des Patentanspruchs.

Es ist grundsätzlich bekannt, Teleskoprohre oder dergleichen zur Befüllung von Tank- oder Siloanlagen mit körnigen Schüttgütern zu verwenden. Dies um eine hohe Beladeleistung zu erreichen und um eine möglichst staubarme Produktförderung zu gewährleisten. Problempunkt ist bei letzterem der Aufprall des Fördergutes auf einer Behälterwandung oder dergleichen, was zur Aufwirbelung des Produkts und damit zur Staubentwicklung führt. Durch verschiedene Massnahmen, wie zum Beispiel eine separate Absaugung oder doppelwandige Beladeköpfe soll die Staubentwicklung minimiert werden.

So beschreibt die DEOS 2627535 ein Beladerohr für Schüttgut mit einer steuerbaren Absperrvorrichtung an der Gutaustrittsseite des Rohrkopfes in Form einer Schwenkklappe, wobei die Steuerung bezüglich der ausgeübten Schliesskraft erfolgt, zum Beispiel mittels einer vorgespannten Feder.

Die DE-U-8812734 offenbart einen Beladekopf zum Beladen von Silos oder dergleichen mit Schüttgut, versehen mit einem Faltenbalg, in dem ein Teleskoprohr angeordnet ist, dessen Gutaustrittsseite trichterförmig ist. Weiterhin ist zentrisch unterhalb des Trichters ein angetriebener Verteilteller angeordnet. Dieser Trichter befindet sich nach dem aufsetzen des Faltenbalges auf bzw. in einer Siloöffnung innerhalb des Siloraumes und das Schüttgut gelangt nur durch einen Ringspalt in das Silo.

Da der Verteilteller beim Schüttguteintrag rotiert, soll eine gleichmässigere Befüllung ohne Brückenbildung u. a. erreicht werden.

Der Erfindung liegt nun die Aufgabe zugrunde, eine Vorrichtung zu schaffen, mit der die bekannten Nachteile des Standes der Technik vermieden werden und eine einfache Vorrichtung für ein staubarmes Beladen zu schaffen. Diese Aufgabe ist an Hand der kennzeichnenden Merkmale des Patentanspruchs gelöst. Weiterführende Ausgestaltungen sind in den Unteransprüchen offenbart.

Durch das abbremsen und auflösen des Produktstromes im Staukopf durch Prallbleche bzw. Schikanen wird eine staubarme Beladung erreicht. Die gefundene Lösung zeichnet sich zugleich durch geringe Masse und nur wenige bewegliche Teile aus, was den Wartungsaufwand reduziert und die Lebensdauer erhöht.

Bevorzugt ermöglicht der Staukopf weiterhin einen gewichtsgesteuerten Produktaustritt, wobei ein Federsystem die Öffnung eines Ventils selbst einstellt.

Im oberen Teil des Staukopfes wird das Schüttgut gestoppt und mittels der eingebauten Schikanen in den Wiegebehälter geleitet, wobei die Fallenergie des Schüttgutes vernichtet wird. Der Wägebehälter ist bevorzugt auf einer Feder abgestützt, wobei die Feder selbst verstellbar ist, um das Restvolumen im Wiegebehälter zu variieren und sie auf verschiedene Produktcharakteristika einstellbar ist.

Der Beladerohr Staukopf selbst ist am Ende eine teleskopierbaren Laufrohres angeordnet. Die Auslauföffnung für das Schüttgut wird bevorzugt nur soweit geöffnet, dass immer ein Produktpolster im Staukopf vorhanden ist. Staubentwicklung durch hohe Produktflussgeschwindigkeit wird dadurch vermieden.

Es sind sowohl gerade als auch schwenkbare Ausführungen des Staukopfes möglich.

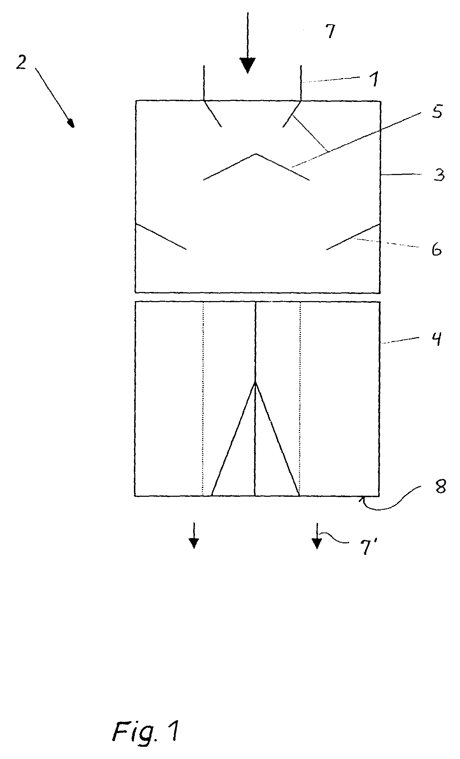

Die Erfindung wird nachfolgend in einem Ausführungsbeispiel an Hand einer Zeichnung näher beschrieben. In der Zeichnung zeigen die
Fig. 1: einen Beladerohr Staukopf im Schnitt

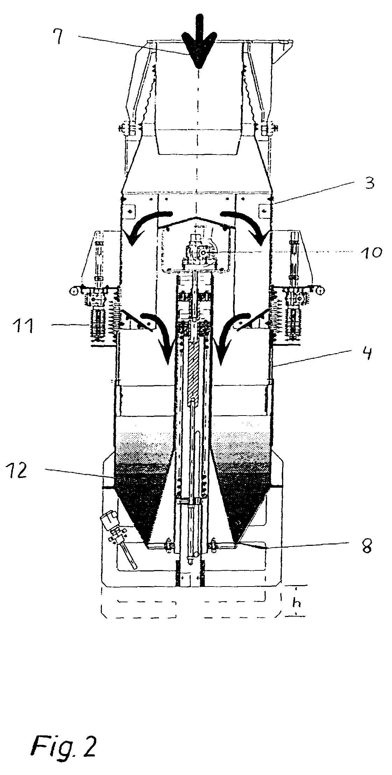

Fig. 2: einen Staukopf nach Fig. 1 mit Produktflussdarstellung.

Am Ende eines nicht näher dargestellten Beladerohres 1, welches auch teleskopartig ineinander schiebbare Abschnitte aufweist, ist ein Staukopf 2 angeordnet. Dieser besteht aus einem oberen Teil, einem so genannten Totschläger 3 und einem darunter befindlichen gewichtsgesteuerten Auslass mit einem Wägebehälter 4.

Das Beladerohr 1 kann einen Kick-Mechanismus (kick in und kick out) aufweisen, um Zugänglichkeit und Raumausnutzung zu verbessern.

Im Totschläger 3 sind verschiedene Prallbleche 5, 6 angeordnet, um die Fallenergie des Schüttgutes 7 zu vernichten und eine Vergleichmässigung des Produktflusses zu erreichen. Ein dachförmiges Prallblech 5 ist direkt unter dem Beladerohr 1 angeordnet, so dass das Schüttgut abgebremst und in alle Richtungen auf die abwärts gerichteten Prallbleche 6 gelenkt wird. Von dort wird das Schüttgut in den Wägebehälter 4 gelenkt. Den Wägebehälter 4 verlässt das Schüttgut 7' durch das Auslassventil 8.

Der Wägebehälter 4 ist auf einer Feder 9 abgestützt, die am Totschläger 3 befestigt ist. Die Feder 9 kann mittels eines Spindelhub-Getriebemotors 10 verstellt werden, so dass das Restvolumen im Wägebehälter 4 variierbar ist und auf verschiedene Produktcharakteristika verstellt werden kann. Weitere Spindelhub-Getriebemotoren 11 sind zur Restentleerung des Wägebehälters 4 vorgesehen.

Das Ventil 8 für den Auslauf wird in Bezug auf den Durchsatz nur soweit geöffnet, dass immer ein Produktpolster 13 im Staukopf 2 bzw. Wägebehälter 4 ansteht. Dadurch wird verhindert, dass das Schüttgut 7' mit hoher Geschwindigkeit aus dem Rohr bzw. dem Auslass fliesst und die vom Schüttgut 7, 7' mitgerissene Luft am Rohraustritt Staub aufwirbelt.

Die Öffnung des Ventils 8 widerspiegelt sich im Hub des Staukopfes, d. h. der Hub wird durch die Füllmenge an Produkt und die Federeigenschaften bestimmt.

### Kurzzeichen

- 1: Beladerohr
- 2: Staukopf
- 3: Totschläger
- 4: Wägebehälter
- 5: Prallblech
- 6: Prallblech
- 7: Schüttgut
- 7': Schüttgut
- 8: Auslassventil
- 9: Feder
- 10: Getriebemotor
- 11: Getriebemotor
- 12: Produktpolster
- h: Hub

## Patentansprüche

1. Beladerohr-Staukopf, insbesondere für Belade- und Tankeinrichtungen für Schüttgut mit einem Beladerohr (1), welches auch teleskopierbare Abschnitte aufweist und einem auslaufseitig an dieses Beladerohr (1) anschliessenden Staukopf (2), dadurch gekennzeichnet, dass der Staukopf (2) ein oberes Teil mit Schikanen und einen, in Produktflussrichtung darunter angeordneten gewichtsgesteuerten Auslass mit einem Wägebehälter (4) aufweist.

2. Beladerohr-Staukopf nach Patentanspruch 1, dadurch gekennzeichnet, dass eine erste Schikane ein Prallblech (5) ist, das dachförmig und unter dem Auslauf des Beladerohres (1) angeordnet ist und eine zweite Schikane seitlich darunter als abwärts gerichtetes Prallblech (6) ausgebildet ist.

3. Beladerohr-Staukopf nach Patentanspruch 2, dadurch gekennzeichnet, dass das Prallblech (6) ringförmig angeordnet ist.

4. Beladerohr-Staukopf nach einem der Patentansprüche 1 bis 3, dadurch gekennzeichnet, dass der Wägebehälter (4) gefedert an dem oberen Teil des Staukopfes (2) abgestützt ist.
